# EUROPEAN PATENT APPLICATION

(11) **EP 1 235 407 A2**
(43) Date of publication of application: **28.08.2002**
(21) Application number: 02003281.9
(22) Date of filing: 22.02.2002
(51) Int. Cl.: H04L 29/06, H04L 12/28

(54) **A method of media streaming based on a protocol for wireless devices**

(30) Priority: 22.02.2001 US 791507
(71) Applicant: SUN MICROSYSTEMS, INC., Palo Alto, California 94303 (US)
(72) Inventor: Arora, Akhil K., San Jose, CA 95129 (US); Holtz, Brian, San Carlos, CA 94070 (US); Sharma, Aseem, Sunnyvale, CA 94086 (US); Ong, Herbert T., Cupertino, CA 95014 (US); Mak, Mingchi Stephen, Belmont, CA 94002 (US); Proulx, David J., San Jose, CA 95112 (US)
(74) Representative: HOFFMANN - EITLE

(57) **Abstract**

The present invention provides a protocol for the transfer of files to and from electronic devices, especially wireless devices. In one embodiment, the present invention is used by these devices connected by any means to the source of the file. These means can be wireless, modem dial-up, or conduit of a PDA. Since the present invention is used by wireless devices which operate on limited and expensive wireless bandwidth, it is not verbose and "chatty" unlike prior art protocols based on clear-text HTML ,XML, or HotSync. The present invention uses HTTP or HTTPS to connect two devices communicating with each other. HTTP is used since it is a protocol that is usually allowed to traverse virtual private network firewalls. The invention allows the server to maintain multiple sessions with different clients. These sessions will end automatically if no data is transferred after a certain length of time has elapsed. These different clients can connect and perform operations concurrently with each other. The present invention supports the following operations, viz.: Identify and Authenticate, List, Get, Replace, Add, Delete, Cancel, and Logout. The invention allows for synchronous transfer of messages to and from the wireless devices. The present invention, in one embodiment, lets the client initiate the transfer. The server does not automate the transfer unless a request is made by the client.

## Description

### BACKGROUND OF THE INVENTION

### 1. FIELD OF THE INVENTION

The present invention relates to the field of transferring data to and from wireless devices.

Portions of the disclosure of this patent document contains material that is subject to copyright protection. The copyright owner has no objection to the facsimile reproduction by anyone of the patent document or the patent disclosure as it appears in the Patent and Trademark Office file or records, but otherwise reserves all rights whatsoever.

Sun, Sun Microsystems, the Sun logo, Solaris and all Java-based trademarks and logos are trademarks or registered trademarks of Sun Microsystems, Inc. in the United States and other countries. All SPARC trademarks are used under license and are trademarks of SPARC International, Inc. in the United States and other countries. Products bearing SPARC trademarks are based upon an architecture developed by Sun Microsystems, Inc.

### 2. BACKGROUND ART

Small computing devices such as Personal Digital Assistants (PDAs) are becoming increasingly popular. One of the advantages of small computing devices is their portability and their ability to interact with, and share data with, a desktop computing system. However, their portability means that computing resources, such as memory and processing power, may be limited. Furthermore, current wireless networks suffer from low bandwidth, and high latencies. These can be a problem in implementing protocols for transferring files between a desktop environment and the small device, particularly in a wireless environment. This problem can be better understood by reviewing PDAs and file transfer protocols.

### PDA

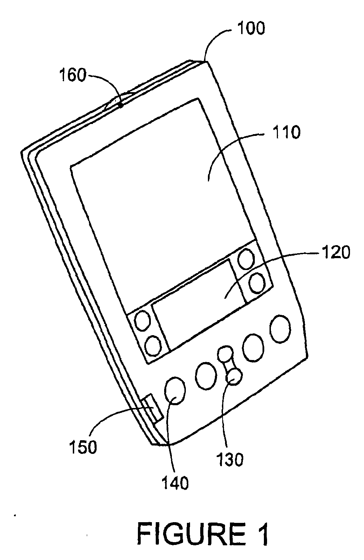

A PDA is a small computer-like device, usually no larger than the palm of a human hand, which typically has a base housing with an input mechanism mounted on its topside, and a miniature display screen for output. Figure 1 is an illustration of one embodiment of a personal digital assistant. The PDA (100) shown in Figure 1 is manufactured by Palm™. The PDA has a base housing (160) with input mechanisms mounted on its topside, and a miniature display screen (110) for output. The base housing of the PDA contains a small microprocessor, data storage and memory areas, a storage battery, and other various miniature electronic components. The electronic components and other features vary depending on the model, make, and manufacturer of the PDA. The PDA is activated and de-activated by accessing the power button (150).

PDA output may take the form of either graphic and/or textual images presented to users on the miniature display screen, or may be presented to users in the form of sound. Additionally, some PDAs can package information for output through cable or wireless networks. Thus, data is transmitted to a general purpose computer. Likewise, data transfers from general purpose computers to PDAs via the same mechanism.

The input mechanism may be, for example, a miniature keyboard (not shown). Alternatively, the miniature display screen may act as both an input and output mechanism. When used as an input mechanism, the user inputs the data via a pen-like stylus or other writing implement (not shown) directly on the display screen. This could take the form of handwriting, or highlighting certain specific areas on the display screen such as buttons, icons, or captions. With reference to Figure 1, the bottom portion (120) of the display screen is where the user provides input using the pen-like stylus. Additional mechanisms for user input include a scroll button (130) and application buttons (140).

Conventional PDAs also contain an operating system and other programs, such as word processing, spreadsheet, e-mail, calendar, memo list, stylus pen applications, and other related applications. The increasing popularity of PDAs stems from their relatively low cost and extreme portability compared to much larger desktop general-purpose computers ("desktop CPUs"). Many users find that for simple computing tasks during trips and other periods of being away from their larger computer devices, the bulk and computing power of even a compact notebook computer are simply not needed. PDA popularity also stems from the fact that they can communicate with most popular desktop applications like spreadsheet programs, word processing programs and e-mail. Thus, transfer of data between PDAs and general purpose desktop computers is possible.

### PDA DATA TRANSFERS AND CONDUIT

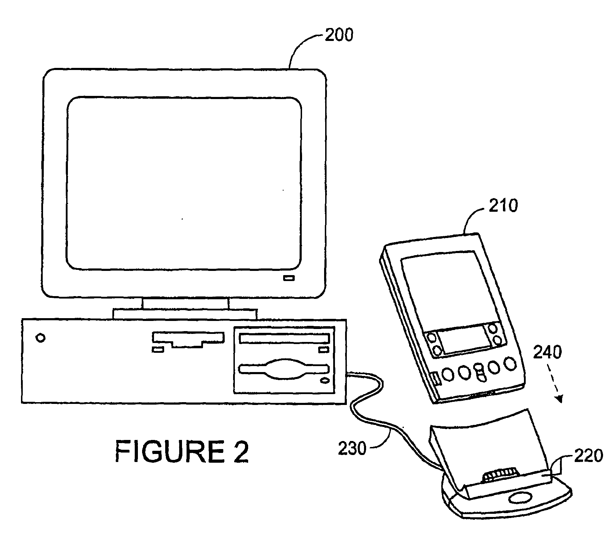

A conventional means of transferring data is by way of a conduit. Figure 2 illustrates one mechanism by which a user transfers data from a desktop CPU (200) to a PDA (210), or vice versa. The desktop CPU couples to the PDA carriage (220) via a connecting line (230). The connecting line represents a conduit.

A conduit provides a two-way data communication coupling via a desktop CPU to a PDA. Although, the conduit represents a cable connection, it will be apparent to one skilled in the art, that the present invention may be practiced with numerous types of connections. For example, if the conduit is an integrated services digital network (ISDN) card or a modem, the conduit provides a data communication connection to the corresponding type of telephone line. Additionally, wireless links are available to the present invention. In any such implementation, the conduit sends and receives electrical, electromagnetic or optical signals, which carry digital data streams representing various types of information.

In operation, a user inserts the PDA into the carriage in the direction generally indicated by the black arrow (240). Thereafter, data is passed bi-directionally across the conduit to achieve the result of transferring data between a PDA and a desktop general purpose computer.

### PDA TRANSFERS

In addition to hardwired transfer schemes, PDA's are often used to access data and service via wireless connections. However, due to size limitations, PDAs have less memory and processing resources than desktop general purpose computers. Thus, conservation of memory and storage space, and implementing simple protocols, is a main concern when designing programs for use on PDAs. If protocols are too complex, they may tax both the processing resources and memory capabilities of the PDA. In addition, it is typically desired to use wireless communication with a data or file source, for convenience. Wireless communication is often bandwidth limited and has high latency, leading to slow communication. Current markup languages used in wired communications include those based on Hypertext Markup Language (HTML), or Extensible Markup Language (XML), for example, and protocols like Hyper Text Transfer Protocol (HTTP), Transmission Control Protocol/Internet Protocol (TCP/IP), Infrared Data Association (IrDA), or Bluetooth, for example.

### HTML

Source information which is stored in the source function is often stored in a format known as "Hypertext Markup Language (HTML)". This file format allows the display of text, graphics and audio information, and provides links to other pages of information through "hyperlinks." Hyperlinks are strings of characters in a particular format that specify the address of the desired page of information.

In particular, HTML is a system for marking documents to indicate how the document should be displayed, and how various documents should be linked together. HTML is a form of Standard Generalized Markup Language (SGML), defined by the International Standards Organization, but protocols using clear text HTML are bogged down in its versatility by its verboseness. An HTML document is made available to users on the web by storing the HTML file in a directory that is accessible by the server. Such a server is typically a web server which conforms to a web browser-supported protocol known as HTTP.

### HTTP

HTTP defines a set of rules that servers and browsers follow when communicating with each other to access any type of content, including HTML. Typically, the process begins when a user accesses an icon in an HTML page which is the anchor of a hyperlink, (for instance, by positioning a cursor on the icon and depressing a mouse button), or the user inputs a Uniform Resource Locator (URL) to the web browser. A connection is then made to the server at the address and port number specified by the URL. Next, the browser sends a request to retrieve an object from the server, or to post data to an object on the server. The server sends a response to the browser including a status code and the response data.

### XML

XML is the 'Extensible Markup Language' (extensible because it is not a fixed format like HTML) managed by the World Wide Web Consortium. It is designed to enable the use of SGML (Standard Generalized Markup Language) on the World Wide Web. XML is not a single, predefined markup language: it's a metalanguage - a language for describing other language - which lets the user design his/her own markup. A predefined markup language like HTML defines a way to describe information in one specific class of documents only; XML lets you define your own customized markup languages for limitless different classes of document. It can do this because it's written in SGML, the international standard metalanguage for text markup systems. The main handicap of protocols using XML is its verboseness.

### SyncML

SyncML is a new industry initiative to develop and promote a single, common data synchronization protocol that can be used industry-wide. SyncML products are not yet available, but it claims to successfully solve mobile computing Achilles' heel - data synchronization. Mobile devices - handheld computers, mobile phones, pagers, laptops - synchronize their data with network applications, desktop calendars, and other locations where information is stored. This ability to access and update information on the fly is key to the pervasive nature of mobile computing. Yet, today, almost every device uses a different technology for performing data synchronization. SyncML tries to solve this by being the common language for synchronizing all devices and applications over any network. SyncML uses XML. With SyncML, networked information can be synchronized with any mobile device, and mobile information can be synchronized with any networked applications. A disadvantage of SyncML is that products based on this markup language are not currently available.

### DATA PACKETS

Data is transferred from one device to another not in a continuous stream, but in the form of packets which are divided into 2 parts, viz.: header and payload. The header contains information vital for error checking, and other protocol specifications, and is considered an overhead of each packet. The payload on the other hand is the section that contains the useful data, and is kept at an optimal length by all packets. Each packet has similar characteristics of all packets in a given transfer, and some of these may include length of each packet, and header content of each packet. Each packet has to be stored temporarily and analyzed by each node in the network before it is forwarded causing a delay. This delay, or network latency, is inherent in all contemporary protocols. Storage of each packet may be necessary because the speed at which a node receives a packet may be faster than the speed at which it can successfully forward it. Analysis of a package is necessary to ensure an error free transfer of data, and part of the analysis is to send acknowledgement of the receipt of a packet by a node to the sender. This added overhead of analyzing is not desirable since contemporary networks have other inherent layers that take care of error checking.

Since the size of a packet is directly proportional to its transmission time, each medium, like fiber optic or wireless, uses a certain packet size to optimize its transmission time. Packet size also depends on the kind of network architecture, and network protocols. Some network architecture require the confirmation of each packet at every node in the network, as seen above, while others transmit packets over a route of least congestion, but this results in packets arriving at the destination non-sequentially. If the destination happens to be a PDA it increases the burden on its limited memory and processing power.

### SUMMARY OF THE INVENTION

It is an object of the invention to provide an improved protocol to connect between a client and a server.

This object of the invention is solved by method for connecting a client to a server comprising: generating a connection message at said client and forwarding it to said server; receiving said connection message at said server and initiating a connection by sending an acknowledgement from said server to said client; generating and sending a command from said client to said server; and receiving said command at said server and generating a forwarding response to said client, said forwarding response comprising a plurality of packets, each of said packets forwarded to said client without waiting for an acknowledgement of receipt from said client, and said packets containing arbitrary content.

The arbitrary content may include, but is not limited to, text, streaming video, streaming audio, and images.

The connection message may be generated at the application layer level at said client and may be received at said application layer level at said server. Further, the connection message may comprise identity and authentication information, and may comprise protocol version information, character encoding information, and device type information.

The command may be one of a group of commands including IDENTIFY & AUTHENTICATE, LIST, GET, REPLACE, ADD, DELETE, CANCEL, and LOGOUT.

The connection may comprise a wireless connection and may comprise a HTTP, or HTTPS connection.

The connection may end automatically after a timeout period.

Each connection may be associated with a session Id and the command and response may include said session ID.

The object of the invention is further solved by a client for connecting to a server comprising: means for generating a connection message and forwarding it to said server; means for receiving an acknowledgement from said server, generated at said server upon receiving said connection message and initiating a connection; means for generating and sending a command from said client to said server; and means for receiving a forwarding response, said forwarding response being generated by said server and comprising a plurality of packets, each of said packets forwarded to said client without waiting for an acknowledgement of receipt from said client, and said packets containing arbitrary content.

The object of the invention is further solved by a server for connecting to a client comprising: means for receiving generated by said client; means for initiating a connection by sending an acknowledgement from said server to said client; means for receiving a command generated by said client; and means for generating a forwarding response to said client, said forwarding response comprising a plurality of packets, each of said packets forwarded to said client without waiting for an acknowledgement of receipt from said client, and said packets containing arbitrary content.

The object of the invention is further solved by a computer program product comprising: a computer usable medium having computer readable program code means embodied in said medium for causing a computer to connect a client to a server, said computer readable program code means comprising: computer readable program code means for causing a computer to generate a connection message at said client and forwarding it to said server; computer readable program code means for causing a computer to receive said connection message at said server and initiating a connection by sending an acknowledgement from said server to said client; computer readable program code means for causing a computer to generate and sending a command from said client to said server; and computer readable program code means for causing a computer to receive said command at said server and generating a forwarding response to said client, said forwarding response comprising a plurality of packets, each of said packets forwarded to said client without waiting for an acknowledgement of receipt from said client, and said packets containing arbitrary content.

A program may have instructions adapted to make a computer carry out the method of the above operations and a computer readable medium may include the program.

Further advantageous features of the invention are disclosed in further claims.

### BRIEF DESCRIPTION OF THE DRAWINGS

These and other features, aspects and advantages of the present invention will become better understood with regard to the following description, appended claims and accompanying drawings where:
- Fig. 1: is an illustration of a wireless device such as a PDA.
- Fig. 2: is an illustration of a PDA coupled with a desktop computer via a conduit.
- Fig. 3: is a flowchart which shows the transfer of a file to and from a wireless device.
- Fig. 4: is a flowchart which shows the various operations after the client initiates the transfer.
- Fig. 5: is an illustration of the Identify and Authenticate operation. It shows a table of the packet content that the client sends to the server, and another table of the packet content that it receives from the server.
- Fig. 6: is an illustration of the List operation. It shows a table of the packet content that the client sends to the server, and another table of the packet content that it receives back from the server.
- Fig. 7: is an illustration of the Get operation. It shows a table of the packet content that the client sends to the server, and another table of the packet content that it receives back from the server.
- Fig. 8: is an illustration of the Replace operation. It shows a table of the packet content that the client sends to the server, and another table of the packet content that it receives back from the server.
- Fig. 9: is an illustration of the Add operation. It shows a table of the packet content that the client sends to the server, and another table of the packet content that it receives back from the server.
- Fig. 10: is an illustration of the Delete operation. It shows a table of the packet content that the client sends to the server, and another table of the packet content that it receives back from the server.
- Fig. 11: is an illustration of the Cancel operation. It shows a table of the packet content that the client sends to the server, and another table of the packet content that it receives back from the server.
- Fig. 12: is an illustration of the Logout operation. It shows a table of the packet content that the client sends to the server, and another table of the packet content that it receives back from the server.
- Fig. 13: is a flowchart illustrating some of the attributes of the Identify and Authenticate command.
- Fig. 14: is a flowchart illustrating some of the attributes of the Get command.
- Fig. 15: is an illustration of an embodiment of a computer execution environment.

### DETAILED DESCRIPTION OF THE INVENTION

The invention provides a protocol for connecting electronic devices, and the transfer of files to and from electronic devices, especially wireless devices. In the following description, numerous specific details are set forth to provide a more thorough description of embodiments of the invention. It is apparent, however, to one skilled in the art, that the invention may be practiced without these specific details. In other instances, well known features have not been described in detail so as not to obscure the invention.

The present invention provides a protocol for connecting electronic devices, and the transfer of files to and from electronic devices, especially wireless devices. In one embodiment, the present invention is used by these devices connected by any means to the source of the file. These means can be wireless, modem dial-up, or conduit of a PDA. Since this protocol is used by wireless devices which operate on limited and expensive wireless bandwidth, it is not verbose and "chatty" unlike prior art protocols based on clear-text HTML ,XML, or HotSync. The present invention uses HTTP or Hypertext Transfer Protocol - Secure (HTTPS, also known as Secure Socket Layer, or SSL) for enhanced security reasons to connect two devices communicating with each other. HTTP is used since it is a protocol that is generally allowed to traverse virtual private network firewalls.

According to one embodiment, the invention allows the server to maintain multiple sessions with different clients. These sessions will end automatically if no data is transferred after a certain length of time has elapsed. These different clients can connect and perform operations concurrently with each other. According to another embodiment, the present invention supports the following operations, viz.: Identify and Authenticate, List, Get, Replace, Add, Delete, Cancel, and Logout. In another embodiment, the invention allows for synchronous transfer of messages to and from the wireless devices. The present invention, in yet another embodiment, lets the client initiate the transfer. The server does not automate the transfer unless a request is made by the client. In yet another embodiment, the initial handshake package of the protocol includes the desired protocol version, (this allows the protocol to evolve over time).

### DATA FORMAT

The present invention supports the same wire formats for primitive types as those used by Java's data input/output stream. If the device using the present invention supports strings in the UTF-8 format, then the protocol transmits data in that format, otherwise the protocol will send the data in a 8-bit extended-ASCII format, like ISO8859. Both these formats have a very short header which increases the space in every packet for the payload. All strings in the protocol are preceded by an Int16 length. This is a short length in JAVA, as opposed to Int32 length, which is a long length. All strings in the present protocol are not null-terminated. This means that the last bit of each string is not used by a non-data value like the null character. Hence by making use of all the available bits in the payload for useful data transmission, the present protocol further reduces terseness and chattiness. Finally, all integers are signed. Signed integers are used in order to have compatibility across languages such as Java and C. This compatibility allows clients to be written in C, and the server in Java, for example, or vice-versa.

### CONNECTION

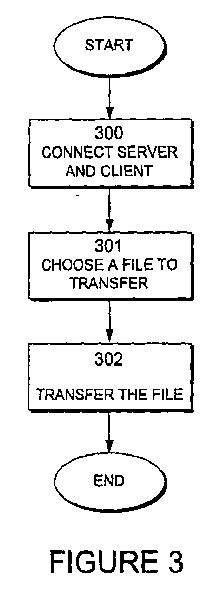

According to one embodiment, the present invention is used by a device connected directly to the source of the transfer file. This source is referred to as the server, while the destination is referred to as the client. This setup is seen in Figure 3, where at step 300 the client is connected to the server. This connection can be in the form of a dial-up modem, wireless, or conduit. Conduits can be of two kinds, viz.: a wire cable that connects a PDA to a desktop (as seen at 230 in Figure 2), or a relayer conduit that connects a wireless device to a desktop. Next at step 301 the file to be transferred is chosen, and at step 302 it is transferred. Furthermore according to one embodiment, the present invention supports all file types containing any arbitrary content. This content may include, and is not limited to, text, records (in the form of a database), streams (video like MPEG or JPEG, or audio like MP3 or RealAudio), or images (.tiff, .gif, etc.).

The present invention uses HTTP to connect a client to a server because HTTP is a that is usually allowed to traverse virtual private network (VPN) firewalls. HTTP is widely supported and implemented on both server (HTTPServlet) and client (the INet library on the Palm VII) sides and is an industry standard. The present invention can also use HTTPS, if additional security is required, to connect a client to a server. The reason the present invention can use a lower level protocol like HTTP is because the present invention runs at the Application layer level (topmost level) in the ISO 7-layer model, unlike prior art protocols that run either at the DataLink layer level (for example TCP), or the Network layer level (for example IP).

The present invention allows a server to maintain concurrent sessions with multiple clients, according to one embodiment. These clients in turn are able to perform their operations concurrent to each other. Since clients do not have to wait in a queue to have their sessions served by a server, the cost of connectivity is reduced and transfers are conducted in a minimum of time.

### TRANSFER OF DATA

In one embodiment, the invention supports synchronous transfer of data (may be in the form of files) to and from wireless devices. Synchronous transfer is when the user issues more than one request, the requests are complied with in the order received. For example, if the user sends a request to Print a certain document, and subsequently sends another request to Save the same document, the Save will be complied with only after the Print is completed.

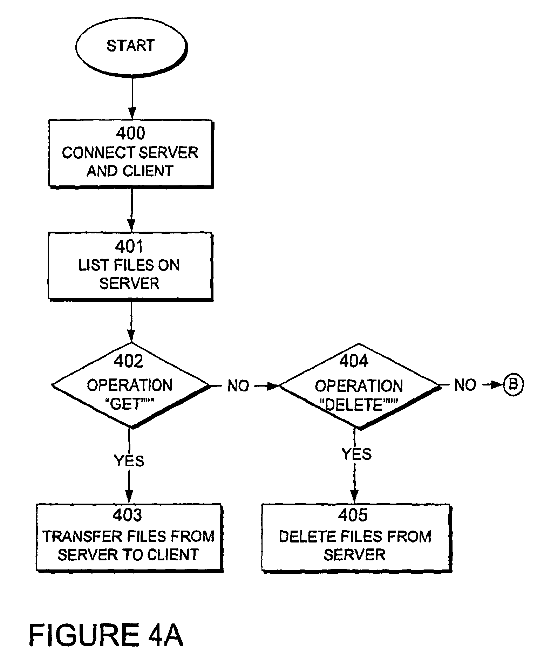

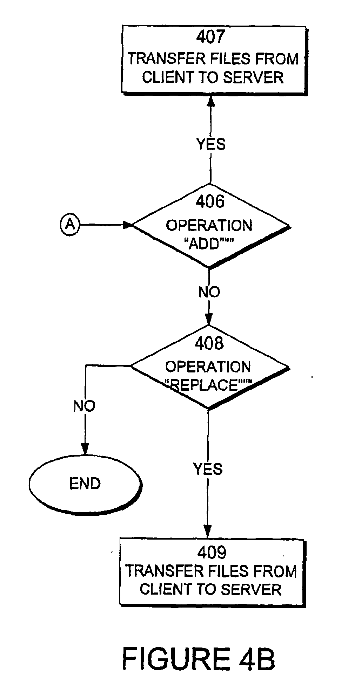

Figure 4 illustrates the various operations that the present protocol supports after the client has initiated the transfer. At step 400, a client is connected to a server. Next, at step 401, the list of files on the server is displayed to the client. The client has several operations at this point that he/she can choose from, and at step 402, if the Get operation is used, then the necessary files are transferred from the server to the client at step 403. If the Delete operation is used instead at step 404, then at step 405 the necessary files are deleted from the server. If the Add operation is used instead at step 406, then at step 407 the necessary files are transferred from the client to the server. If the Replace operation is used instead at step 408, then at step 409 the necessary files are transferred from the client to the server.

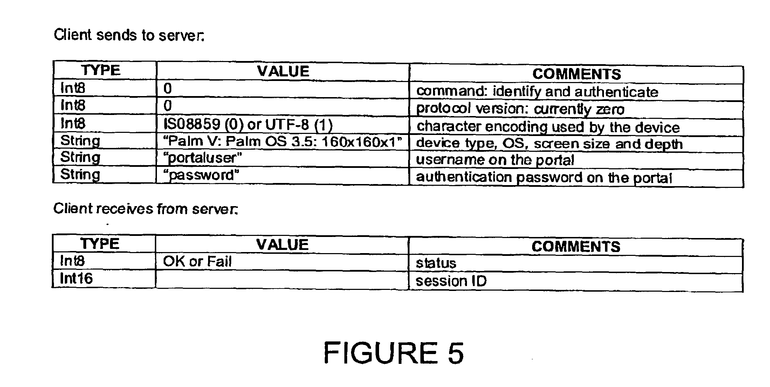

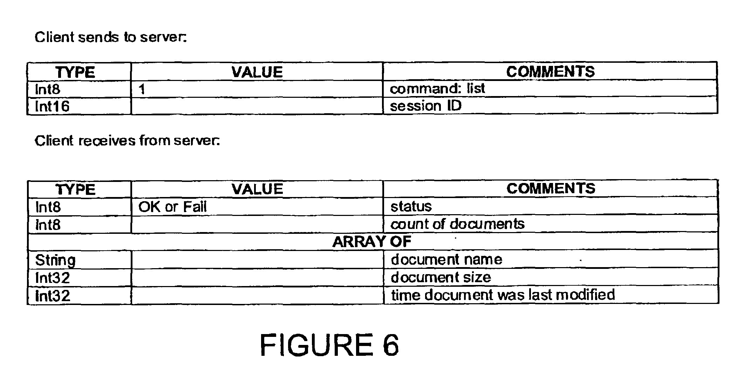

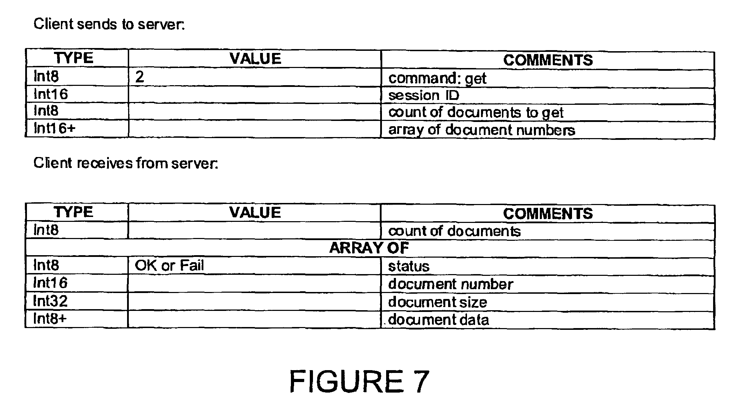

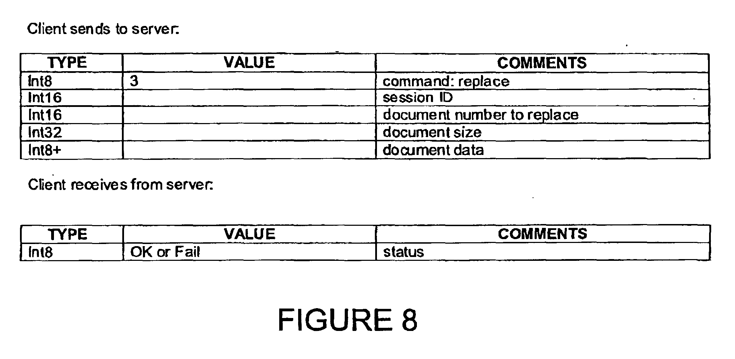

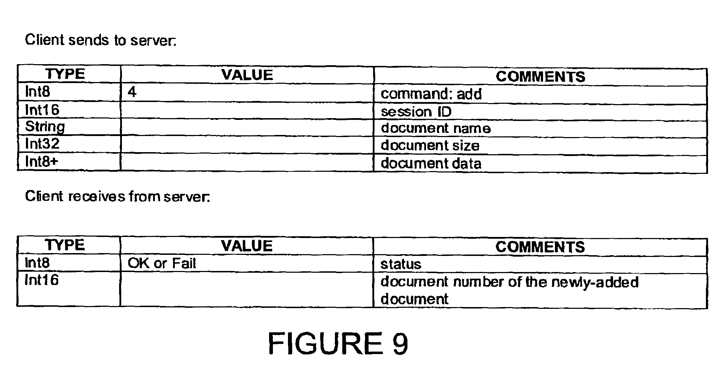

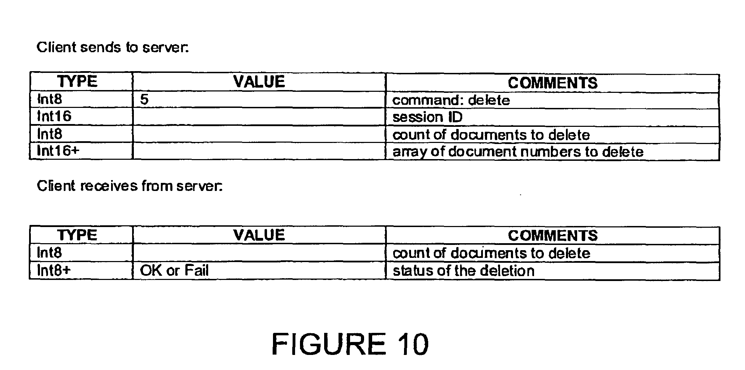

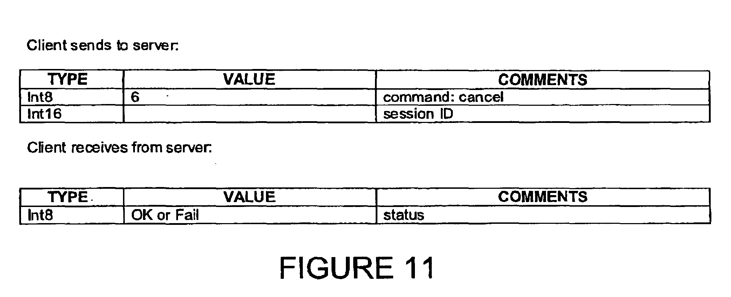

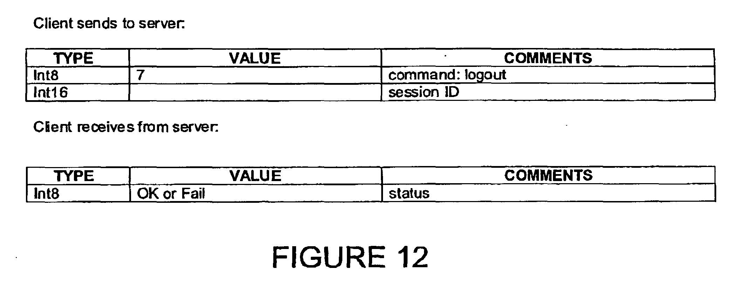

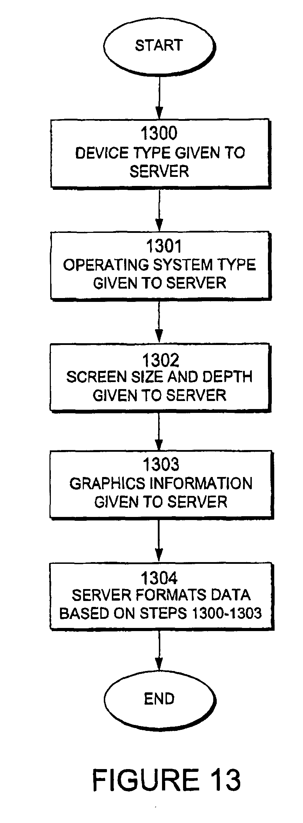

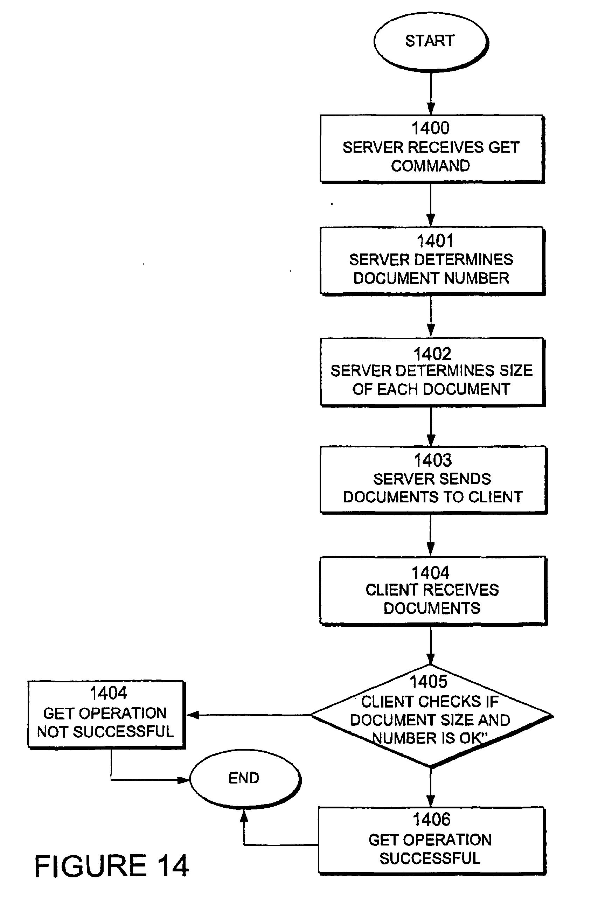

The present invention supports the Identify and Authenticate List, Get, Replace, Add, Delete, Cancel, and Logout operations, and are illustrated in more detail in Figures 5 through 14.
A) Identify and Authenticate - A client will be able to identify itself with a user identity, such as a username, and authenticate itself with a user password. The password can be chosen by the user under certain conditions, or can be set by the administrator of the server. In both cases, the present invention keeps the password anonymous to deter unauthorized clients. This operation is illustrated in Figure 5, where the contents of the packet sent to and from a server are shown in tabular format.
   One aspect of the Identify and Authenticate operation denotes the device type, operating system, and screen size and depth. By virtue of the kind of device the client is hosted on, these attributes let the server format the data to be sent back to the client. An example of this is seen in Figure 13, where at step 1300 the device type is given to the server by the client. Next, at step 1301, the operating system type is given to the server. Next, at step 1302, the screen size and depth is given to the server. At step 1303, if the client is hosted on a device that supports color, then this information along with any other graphics related information is given to the server. Finally, at step 1304, the server uses the information received at steps 1300 through 1303 to format the data to be sent back to the client. This way the client gets the data in a format suitable for the kind of device he/she is hosted on. Since information that helps in formatting the data to be received by a client is sent once during the Identify and Authenticate operation, the client does not have to send this information or portions thereof in future commands. This helps in reducing the "chattiness" of the present protocol, and helps in using the limited and expensive bandwidth of a wireless connection more economically.
   After the connection has been established, the user may perform several tasks, like listing all available files, getting files, replacing files, adding files, deleting files, canceling an operation, and logging out, which can be executed using the appropriate commands. These commands are explained in further detail below.
B) List - A client is able to obtain a list of all files available for transfer to it. Along with the name of the file, other attributes like its size, date of creation, and date of last modification are also transferred. This allows for similar information regarding the files be available to both the server and client. An illustration of the contents of a packet to and from a server is seen in Figure 6.
C) Get - A client is able to transfer a file using this operation. The present protocol allows for the transfer of multiple files with the help of one single Get request. As seen earlier, this is one way that the present invention reduces chattiness. Figure 7 shows an illustration of the Get operation. The number of elements in the returned array found in the packet that the client receives from the server must be equal to the count of documents requested. If this count is unequal, the transfer of information to and from the server was not successful, and the client has the choice of re-submitting the request or postponing it to a later time.
   The document number, size, and data attributes that the client receives from the server indicates whether the Get command was successfully executed or not. An example run is shown in Figure 14 where at step 1400 a server receives the Get command from a client. Based on the count of documents to get (which is an attribute of the Get command that the client sends to the server), the server determines the document number at step 1401. Since the present protocol supports multiple documents that can be sent using just one Get command, the client can specify more than one document from the server. Next, at step 1402, the size of each document is determined by the server. At step 1403, the documents are sent to the client. The client receives the documents at step 1404. Next, at step 1405, the document number and size is checked by the client to determine if the Get command was successful or not. If the document number and size match what the client requested, then at step 1406 the client knows that the Get operation was successful. If on the other hand the document number and size do not match, then at step 1407 the client knows that the Get operation was unsuccessful, and can decide if the operation needs to be complied with again or can be postponed to a later time.
D) Replace - A client is able to replace an existing file on a server using this operation. If the replace is not completely successful, the present invention lets the client know of the failure, and restores the older version on the server. In this way, the older version of the file is not lost on the server. As discussed earlier, the client only finds out at the end of the request whether it was successful or not. An illustration of the Replace operation is seen in Figure 8, where the first table shows the packet content that the client sends to the server, and the second table is what is sent back by the server to the client.
E) Add - A client uses this operation to transfer a new file to a server. The file to be transferred can either be created by the user on the client side, or have the file transferred to it from some other source. An illustration of the Add operation is seen in Figure 9, where the first table shows the contents of the packet sent to the server by the client, and the second table shows the content of the return packet.
F) Delete - With this operation, if a file is deleted from the client side before the client is synchronized with a server, the file is also deleted from the server. An illustration of the Delete operation is seen in Figure 10, where the first table shows the contents of the packet sent to the server by the client, and the second table shows the content of the return packet.
G) Cancel - With this operation, a client has the option to cancel any potentially lengthy operation. An illustration of the Cancel operation is seen in Figure 11, where the first table shows the contents of the packet sent to a server by the client, and the second table shows the content of the return packet. This operation can be performed asynchronously.
H) Logout - With this operation, a client can close or end a session with a server. If any other operations are in progress when the Logout request is issued, they get terminated as well. An illustration of the Logout operation is seen in Figure 12, where the first table shows the contents of the packet sent to the server by the client, and the second table shows the content of the return packet. This operation can be performed asynchronously.

### ADVANTAGE OVER PRIOR ART SCHEMES

In all the operations mentioned above, a client makes a request to a server, which is received without any error checking steps at each node. Similarly, these requests are complied by the server without any error checks made at individual nodes along the way. An error checking step eliminated by this protocol is the acknowledgement (ACK) or non-acknowledgement (NACK) of a packet received at each node. In prior art, there is an ACK/NACK sent back to the sender by each receiving node in the network. This ACK/NACK is sent in different ways depending on the kind of protocol. Some allow the receiver to send an ACK/NACK for every packet received, which forces the sender to wait before the next packet can be sent. Others allow the receiver to send an ACK/NACK after a certain fixed number of packets received. While still others allow the sender to keep transmitting the packets simultaneously while ACKs/NACKs are sent back to it by the receiver. All these methods increase the time of transmittal, which the present invention boasts of eliminating because wireless devices use a limited and expensive bandwidth to transmit data and ACKs/NACKs increase the verboseness of a protocol.

Since there are no ACKs/NACKs sent to the sender, the receiver may either get the entire transfer successfully, or there may be sections missing. This present invention will let the receiver know just once (at the end of an operation) if it was successful or not. It is up to the sender to retransmit the operation or to postpone it for another time.

### EMBODIMENT OF A COMPUTER EXECUTION ENVIRONMENT

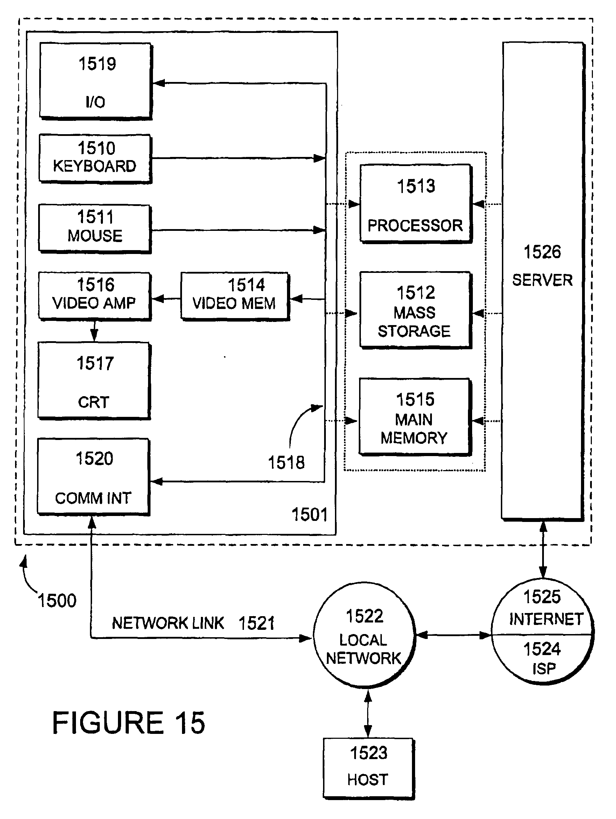

An embodiment of the invention can be implemented as computer software in the form of computer readable code executed in a desktop general purpose computing environment such as environment 1500 illustrated in Figure 15, or in the form of bytecode class files running in such an environment. A keyboard 1510 and mouse 1511 are coupled to a bi-directional system bus 1518. The keyboard and mouse are for introducing user input to a computer 1501 and communicating that user input to processor 1513.

Computer 1501 may also include a communication interface 1520 coupled to bus 1518. Communication interface 1520 provides a two-way data communication coupling via a network link 1521 to a local network 1522. For example, if communication interface 1520 is an integrated services digital network (ISDN) card or a modem, communication interface 1520 provides a data communication connection to the corresponding type of telephone line, which comprises part of network link 1521. If communication interface 1520 is a local area network (LAN) card, communication interface 1520 provides a data communication connection via network link 1521 to a compatible LAN. Wireless links are also possible. In any such implementation, communication interface 1520 sends and receives electrical, electromagnetic or optical signals, which carry digital data streams representing various types of information.

Network link 1521 typically provides data communication through one or more networks to other data devices. For example, network link 1521 may provide a connection through local network 152 to local server computer 1523 or to data equipment operated by ISP 1524. ISP 1524 in turn provides data communication services through the world wide packet data communication network now commonly referred to as the "Internet" 1525. Local network 1522 and Internet 1525 both use electrical, electromagnetic or optical signals, which carry digital data streams. The signals through the various networks and the signals on network link 1521 and through communication interface 1520, which carry the digital data to and from computer 1500, are exemplary forms of carrier waves transporting the information.

Processor 1513 may reside wholly on client computer 1501 or wholly on server 1526 or processor 1513 may have its computational power distributed between computer 1501 and server 1526. In the case where processor 1513 resides wholly on server 1526, the results of the computations performed by processor 1513 are transmitted to computer 1501 via Internet 1525, Internet Service Provider (ISP) 1524, local network 1522 and communication interface 1520. In this way, computer 1501 is able to display the results of the computation to a user in the form of output. Other suitable input devices may be used in addition to, or in place of, the mouse 1111 and keyboard 1110. I/O (input/output) unit 1119 coupled to bi-directional system bus 1118 represents such I/O elements as a printer, A/V (audio/video) I/O, etc..

Computer 1501 includes a video memory 1514, main memory 1515 and mass storage 1512, all coupled to bi-directional system bus 1518 along with keyboard 1510, mouse 1511 and processor 1513.

As with processor 1513, in various computing environments, main memory 1515 and mass storage 1512, can reside wholly on server 1526 or computer 1501, or they may be distributed between the two. Examples of systems where processor 1513, main memory 1515, and mass storage 1512 are distributed between computer 1501 and server 1526 include the thin-client computing architecture developed by Sun Microsystems, Inc., the palm pilot computing device, Internet ready cellular phones, and other Internet computing devices.

The mass storage 1512 may include both fixed and removable media, such as magnetic, optical or magnetic optical storage systems or any other available mass storage technology. Bus 1518 may contain, for example, thirty-two address lines for addressing video memory 1514 or main memory 1515. The system bus 1518 also includes, for example, a 32-bit data bus for transferring data between and among the components, such as processor 1513, main memory 1515, video memory 1514, and mass storage 1512. Alternatively, multiplex data/address lines may be used instead of separate data and address lines.

In one embodiment of the invention, the processor 1513 is a microprocessor manufactured by Motorola, such as the 680X0 processor or a microprocessor manufactured by Intel, such as the 80X86, or Pentium processor, or a SPARC microprocessor from Sun Microsystems, Inc. However, any other suitable microprocessor or microcomputer may be utilized. Main memory 1515 is comprised of dynamic random access memory (DRAM). Video memory 1514 is a dual-ported video random access memory. One port of the video memory 1514 is coupled to video amplifier 1516. The video amplifier 1516 is used to drive the cathode ray tube (CRT) raster monitor 1517. Video amplifier 1516 is well known in the art and may be implemented by any suitable apparatus. This circuitry converts pixel data stored in video memory 1514 to a raster signal suitable for use by monitor 1517. Monitor 1517 is a type of monitor suitable for displaying graphic images.

Computer 1501 can send messages and receive data, including program code, through the network(s), network link 1521, and communication interface 1520. In the Internet example, remote server computer 1526 might transmit a requested code for an application program through Internet 1525, ISP 1524, local network 1522 and communication interface 1520. The received code may be executed by processor 1513 as it is received, and/or stored in mass storage 1512, or other non-volatile storage for later execution. In this manner, computer 1500 may obtain application code in the form of a carrier wave. Alternatively, remote server computer 1526 may execute applications using processor 1513, and utilize mass storage 1512, and/or video memory 1515. The results of the execution at server 1526 are then transmitted through Internet 1525, ISP 1524, local network 1522, and communication interface 1520. In this example, computer 1501 performs only input and output functions.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the invention may be implemented in any type of computer system or programming or processing environment.

Thus, a protocol for the transfer of files to and from electronic devices, especially wireless devices is described in conjunction with one or more specific embodiments. The invention is defined by the following claims and their full scope of equivalents.

Further, according to another embodiment, a client for connecting to a server may comprise: means for generating a connection message and forwarding it to said server; means for receiving an acknowledgement from said server, generated at said server upon receiving said connection message and initiating a connection; means for generating and sending a command from said client to said server; and means for receiving a forwarding response, said forwarding response being generated by said server and comprising a plurality of packets, each of said packets forwarded to said client without waiting for an acknowledgement of receipt from said client, and said packets containing arbitrary content.

Further, according to another embodiment, a server for connecting to a client may comprise: means for receiving generated by said client; means for initiating a connection by sending an acknowledgement from said server to said client; means for receiving a command generated by said client; and means for generating a forwarding response to said client, said forwarding response comprising a plurality of packets, each of said packets forwarded to said client without waiting for an acknowledgement of receipt from said client, and said packets containing arbitrary content.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

A program may have instructions adapted to make a computer carry out the operations of the above embodiments. A computer readable medium, in which a program is embodied, where the program is to make a computer execute the operations of the above embodiments.

According to another embodiment, an article of manufacture may have the following structure.
1) An article of manufacture comprising:
   a computer usable medium having computer readable program code embodied therein for connecting a client to a server, said computer readable program code in said article of manufacture comprising:
      computer readable program code configured to cause said computer to generate a connection message at said client and forwarding it to said server;
      computer readable program code configured to cause said computer to receive said connection message at said server and initiate a connection by sending an acknowledgement from said server to said client;
      computer readable program code configured to cause said computer to generate and send a command from said client to said server; and
      computer readable program code configured to cause said computer to receive said command at said server and generate a forwarding response to said client, said forwarding response to comprise a plurality of packets, each of said packets forwarded to said client without waiting for an acknowledgement of receipt from said client, and said packets containing arbitrary content.
2) The article of manufacture of 1) wherein said packets contain arbitrary content includes, and is not limited to, text, streaming video, streaming audio, and images.
3) The article of manufacture of 1) wherein said connection message is generated at the application layer level at said client.
4) The article of manufacture of 1) wherein said connection message is received at said application layer level at said server.
5) The article of manufacture of 1) wherein computer readable program code configured to cause said computer to generate a connection message comprises identity and authentication information.
6) The article of manufacture of 1) wherein said connection message comprises protocol version information, character encoding information, and device type information.
7) The article of manufacture of 1) wherein said computer readable program code configured to cause said computer to receive said command is one of a group of commands including IDENTIFY & AUTHENTICATE, LIST, GET, REPLACE, ADD, DELETE, CANCEL, and LOGOUT.
8) The article of manufacture of 1) wherein said connection comprises a wireless connection.
9) The article of manufacture of 1) wherein said connection comprises a HTTP, or HTTPS connection.
10) The article of manufacture of 1) wherein said connection ends automatically after a timeout period.
11) The article of manufacture of 1) wherein each said connection is associated with a session ID.
12) The article of manufacture of 11) wherein said command and response includes said session ID.

According to another embodiment a method for connecting a client to a server may comprise; generating a connection message at said client and forwarding it to said server; receiving an acknowledgement from said server at said client, generated at said server upon receiving said connection message and initiating a connection; generating and sending a command from said client to said server; and receiving a forwarding response at said client, said forwarding response being generated by said server and comprising a plurality of packets, each of said packets forwarded to said client without waiting for an acknowledgement of receipt from said client, and said packets containing arbitrary content.

According to yet another embodiment a method for connecting a client to a server may comprise: receiving a connection message at said server generated by said client; initiating a connection by sending an acknowledgement from said server to said client; receiving a command at said server generated by said client; and generating a forwarding response to said client, said forwarding response comprising a plurality of packets, each of said packets forwarded to said client without waiting for an acknowledgement of receipt from said client, and said packets containing arbitrary content.

## Claims

1. A method for connecting a client to a server comprising:
generating a connection message at said client and forwarding it to said server;
receiving said connection message at said server and initiating a connection by sending an acknowledgement from said server to said client;
generating and sending a command from said client to said server; and
receiving said command at said server and generating a forwarding response to said client, said forwarding response comprising a plurality of packets, each of said packets forwarded to said client without waiting for an acknowledgement of receipt from said client, and said packets containing arbitrary content.

2. The method of claim 1 wherein said arbitrary content includes, and is not limited to, text, streaming video, streaming audio, and images.

3. The method of at least one of claims 1 and 2 wherein said connection message is generated at the application layer level at said client.

4. The method of at least one of claims 1 to 3 wherein said connection message is received at said application layer level at said server.

5. The method of at least one of claims 1 to 4 wherein said connection message comprises identity and authentication information.

6. The method of at least one of claims 1 to 5 wherein said connection message comprises protocol version information, character encoding information, and device type information.

7. The method of at least one of claims 1 to 6 wherein said command is one of a group of commands including IDENTIFY & AUTHENTICATE, LIST, GET, REPLACE, ADD, DELETE, CANCEL, and LOGOUT.

8. The method of at least one of claims 1 to 7 wherein said connection comprises a wireless connection.

9. The method of at least one of claims 1 to 8 wherein said connection comprises a HTTP, or HTTPS connection.

10. The method of at least one of claims 1 to 9 wherein said connection ends automatically after a timeout period.

11. The method of at least one of claims 1 to 10 wherein each connection is associated with a session ID.

12. The method of claim 11 wherein said command and response includes said session ID.

13. A client for connecting to a server comprising:
means for generating a connection message and forwarding it to said server;
means for receiving an acknowledgement from said server, generated at said server upon receiving said connection message and initiating a connection;
means for generating and sending a command from said client to said server; and
means for receiving a forwarding response, said forwarding response being generated by said server and comprising a plurality of packets, each of said packets forwarded to said client without waiting for an acknowledgement of receipt from said client, and said packets containing arbitrary content.

14. The client of claim 13 wherein said arbitrary content includes, and is not limited to, text, streaming video, streaming audio, and images.

15. The client of at least one of the claims 13 and 14 wherein said connection message is generated at the application layer level at said client.

16. The client of at least one of claims 13 to 15 wherein said connection message comprises identity and authentication information.

17. The client of at least one of claims 13 to 16 wherein said connection message comprises protocol version information, character encoding information, and device type information.

18. The client of at least one of claims 13 to 17 wherein said command is one of a group of commands including IDENTIFY & AUTHENTICATE, LIST, GET, REPLACE, ADD, DELETE, CANCEL, and LOGOUT.

19. The client of at least one of claims 13 to 18 wherein said connection comprises a wireless connection.

20. The client of at least one of claims 13 to 19 wherein said connection comprises a HTTP, or HTTPS connection.

21. The client of at least one of claims 13 to 20 wherein said connection ends automatically after a timeout period.

22. The client of at least one of claims 13 to 21 wherein each connection is associated with a session ID.

23. The client of claim 22 wherein said command and response includes said session ID.

24. A server for connecting to a client comprising:
means for receiving generated by said client;
means for initiating a connection by sending an acknowledgement from said server to said client;
means for receiving a command generated by said client; and
means for generating a forwarding response to said client, said forwarding response comprising a plurality of packets, each of said packets forwarded to said client without waiting for an acknowledgement of receipt from said client, and said packets containing arbitrary content.

25. The server of claim 24 wherein said arbitrary content includes, and is not limited to, text, streaming video, streaming audio, and images.

26. The server of at least one of claims 24 and 25 wherein said connection message is received at said application layer level at said server.

27. The server of at least one of claims 24 to 26 wherein said connection message comprises identity and authentication information.

28. The server of at least one of claims 24 to 27 wherein said connection message comprises protocol version information, character encoding information, and device type information.

29. The server of at least one of claims 24 to 28 wherein said command is one of a group of commands including IDENTIFY & AUTHENTICATE, LIST, GET, REPLACE, ADD, DELETE, CANCEL, and LOGOUT.

30. The server of at least one of claims 24 to 29 wherein said connection comprises a wireless connection.

31. The server of at least one of claims 24 to 30 wherein said connection comprises a HTTP, or HTTPS connection.

32. The server of at least one of claims 24 to 31 wherein said connection ends automatically after a timeout period.

33. The server of at least one of claims 24 to 32 wherein each connection is associated with a session ID.

34. The server of claim 33 wherein said command and response includes said session ID.

35. A computer program product comprising:
a computer usable medium having computer readable program code means embodied in said medium for causing a computer to connect a client to a server, said computer readable program code means comprising:
computer readable program code means for causing a computer to generate a connection message at said client and forwarding it to said server;
computer readable program code means for causing a computer to receive said connection message at said server and initiating a connection by sending an acknowledgement from said server to said client;
computer readable program code means for causing a computer to generate and sending a command from said client to said server; and
computer readable program code means for causing a computer to receive said command at said server and generating a forwarding response to said client, said forwarding response comprising a plurality of packets, each of said packets forwarded to said client without waiting for an acknowledgement of receipt from said client, and said packets containing arbitrary content.

36. The computer program product of claim 35 wherein said arbitrary content includes, and is not limited to, text, streaming video, streaming audio, and images.

37. The computer program product of at least one of claims 35 and 36 wherein said connection message is generated at the application layer level at said client.

38. The computer program product of at least one of claims 35 to 37 wherein said connection message is received at the application layer level at said server.

39. The computer program product of at least one of claims 35 to 38 wherein said connection messages comprises identity and authentication information.

40. The computer program product of at least one of claims 35 to 39 wherein said connection message comprises protocol version information, character encoding information, and device type information.

41. The computer program product of at least one of claims 35 to 40 wherein said command is one of a group of commands including IDENTIFY & AUTHENTICATE, LIST, GET, REPLACE, ADD, DELETE, CANCEL, and LOGOUT.

42. The computer program product of at least one of claims 35 to 41 wherein said connection comprises a wireless connection.

43. The computer program product of at least one of claims 35 to 42 wherein said connection comprises a HTTP, or HTTPS connection.

44. The computer program product of at least one of claims 35 to 43 wherein said connection ends automatically after a timeout period.

45. The computer program product of at least one of claims 35 to 44 wherein each connection is associated with a session ID.

46. The computer program product of claim 45 wherein said command and response includes said session ID.

47. A program having instructions adapted to make a computer carry out the method of at least one of the claims 1 - 12.

48. A computer readable medium, in which a program is embodied, where the program is to make a computer execute the method of at least one of the claims 1 - 12.
